# EUROPEAN PATENT APPLICATION

(11) **EP 2 384 625 A1**
(43) Date of publication of application: **09.11.2011**
(21) Application number: 10162156.3
(22) Date of filing: 06.05.2010
(51) Int. Cl.: A01N 25/30, A01N 43/42, A01N 43/40, A01N 39/04, A01N 39/02, A01N 37/40, A01P 13/00

(54) **Surfactant blends for auxin activity herbicides**

(71) Applicant: Akzo Nobel Chemicals International B.V., 3811 MH Amersfoort (NL)
(72) Inventor: Sun, Jinxia, Susan, Hopewell Junction, NY 12533 (US)
(74) Representative: Alferink, Petrus J.T.

(57) **Abstract**

The present invention teaches a surfactant blend composition of at least one alcohol alkoxylate and at least one alkoxylated quaternary, and its use as an adjuvant for auxin-based pesticides. The pesticidal composition employing the surfactant blend composition of the invention realizes an efficacy that is unexpectedly superior to similar pesticidal compositions which employ only the individual surfactant components. The composition of the present invention is useful as a tank side additive, or as a component in the mention pesticidal formulations.

## Description

### Field of the Invention

The present invention generally relates to surfactant blends of at least one nonionic alkoxylate and at least one alkoxylated quaternary surfactant. This blend has demonstrated significantly enhanced efficacy for auxin type herbicides, such as the best well known herbicide of this type like 2, 4-D and Dicamba, compared to the individual components when used alone.

### Background of the Invention

Many pesticides require the addition of an adjuvant to the spray mixture to provide wetting and penetration on plant foliar surfaces. Often that adjuvant is a surfactant, which can perform a variety of functions, such as increasing spray droplet retention on difficult to wet leaf surfaces, or to provide penetration of the herbicide into the plant cuticle. These adjuvants are either provided as a component in an adjuvant formulation or used as an additive in herbicide formulations.

It is well known in the art that a specific pesticide requires specific adjuvants for enhanced efficacy. Using glyphosate herbicide as an example, Wyrill & Burnside concluded in an article, Weed Science 25, 275-287, 1977 that "an effective surfactant is a critical component of any glyphosate spray mixture", but noted great variation among surfactant types in the degree of enhancement of herbicidal activity afforded. In general, cationic surfactants gave the greatest degree of enhancement. The authors also remarked that the effectiveness of combinations of surfactants was generally unpredictable, and warned against the "indiscriminate mixing of surfactants" in glyphosate spray compositions.

While glyphosate requires cationic surfactants to enhance its efficacy, glufosinate requires anionic surfactants (e.g., lauryl ether sulfate) to enhance its efficacy even though both glyphosate and glufosinate belong to the same herbicide family and share many similarities in terms of selectivity (both are broad spectrum herbicides), application method (both are foliar applied), and symptoms on susceptible weed species (both show foliar chlorosis followed by plant necrosis). The different requirement for the adjuvants may be due to their different modes of action. The similarity and difference for these two herbicides are listed in Table 1.

**Table 1. Glyphosate and Glufosinate comparison**

| **Common Name** | **Glyphosate** | **Glufosinate** |
|---|---|---|
| Chemical name | N-phosphono-methyl-2-amino-2-acetic acid | 2-amino-4-(hydroxyl methyl phosphinyl)butanoic acid |
| Structure | 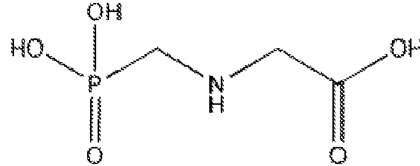 | 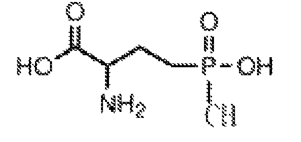 |
| Activity | Non selective herbicide | Non selective herbicide |
| Symptomology | foliar chlorosis and followed by necrosis | Chlorosis followed by necrosis |
| Absorption | Through plant leaves | Through plant leaves |
| Translocation | Primarily translocated in the symplast with accumulation in underground tissues, immature leaves, and meristems | Translocation in both xylem or phloem is very limited |
| Mechanism | Inhibit the aromatic amino acids trypotophan, tyrosine, and phenylalanine systhesis, which are all needed for protein synthesis or for biosynthetic pathways, leading to growth | Inhibits glutamine synthesis. Accumulation of ammonia in the plant destroys cells and directly inhibits photosystem reactions. |
| Surfactant dependency | Strongly depends on surfactant to enhance the biological efficacy | Strongly depends on surfactant to enhance the biological efficacy |
| Surfactant type | Amine based adjuvant shows the optimum enhancement effect | Lauryl ether sulfate based adjuvants show the best result and amine based adjuvants show little effect |

The example of glyphosate and glufosinate demonstrates that even two herbicides which share similar chemical structures can have different behaviors and mechanisms resulting in different requirement for adjuvants. Since it is not possible to infer that a good adjuvant for one herbicide (i.e., glyphosate) will also be a good adjuvant for another herbicide (i.e., glufosinate) with similar mechanism (amino acid inhibitors), it is not possible either to predict that a good adjuvant for glyphosate herbicide will also be a good adjuvant for 2,4-D herbicide (an auxin type herbicide, in a different herbicide family from glyphosate).

Herbicides with auxin activity are separated into two groups, one with an oxygen bridge between an aromatic substituent and a carboxylic acid, e.g. 2,4-D, the other with a carboxyl group directly attached to the aromatic ring, e.g. Dicamba. Herbicides with a free carboxyl group are essential for auxin transport and activity.

Glyphosate and 2,4-D differ not only in chemical structure but also in selectivity and mode of action. The following table, Table 2, shows the difference between glyphosate and 2,4-D.

**Table 2. Glyphosate and 2,4-D comparison**

| **Common Name** | **Glyphosate** | **2,4- D** |
|---|---|---|
| Chemical name | N-phosphono-methyl-2-amino-2-acetic acid | 2-(2,4-dichlorophenoxy) acetic acid |
| Structure | 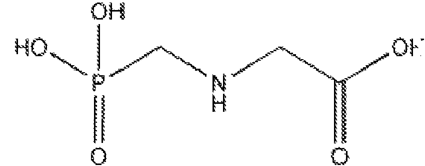 | 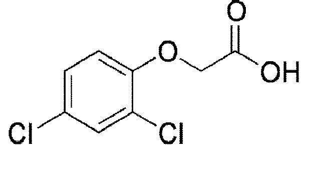 |
| Activity | Non selective herbicide | selective broad leaf herbicide |
| Symptomology | foliar chlorosis and followed by necrosis | Epinastic bending and twisting of stems and petioles, stem swelling and elongation and leaf cupping and curling. |
| Absorption | Through plant leaves | Through both plant leaves and roots |
| Translocation | Primarily translocated in the symplast with accumulation in underground tissues, immature leaves, and meristems | Translocation primarily via the symplastic pathway and accumulate principally at the growing points of the shoots and roots |
| Mechanism | Inhibit the aromatic amino acids trypotophan, tyrosine, and phenylalanine systhesis, which are all needed for protein synthesis or for biosynthetic pathways, leading to growth | Addition of "synthetic IAA" results in an imbalance of the growth regulating hormone. |
| Surfactant dependency | Strongly depends on surfactant to enhance the biological efficacy | "Right" surfactants are able to enhance 2,4-D's biological efficacy significantly |
| Surfactant type | Amine based adjuvants show the best effect while anionic surfactants show little effect | Novelty surfactant blends of the present invention |

The evidence can be used to prove that we can not use the knowledge with published glyphosate patents to predict the biological activity of 2,4-D. Therefore, it is impossible to imply the adjuvants which works well for glyphosate will work for auxin type herbicides too.

U.S. Patent No. 6,245,713 to Monsanto discloses various adjuvant blends mainly to increase the biological efficacy of various glyphosate formulations. One of the blends disclosed is a blend of a long chain alkylether surfactant and an amine surfactant which could be an ethoxylated quaternary surfactant.

### Summary of the Invention

The present invention is directed to a herbicidal formulation comprising at least one auxin type herbicide and at least one adjuvant, wherein said adjuvant comprises a blend of an alcohol ethoxylate and ethoxylated quaternary surfactant. The present inventors have unexpectedly discovered that the blend of alcohol ethoxylate and ethoxylated quaternary surfactants significantly enhanced the efficacy of herbicides with auxin activity such as 2,4-D and dicamba. That is, the plant control efficacy of 2,4-D herbicide containing the blend of the alcohol ethoxylate and ethoxylated quaternary surfactant was better than the efficacy of 2,4-D herbicide containing either of the alcohol ethoxylate or ethoxylated quaternary surfactant.

Useful alkoxylated alcohol surfactant of the present invention has the following general formula:

R¹-O-(CₘH₂ₘO)ₓ-(CₙH₂ₙO)_{y}-H (I)

wherein R¹ is a straight or branched, saturated or unsaturated, substituted or unsubstituted hydrocarbon group having from 4 to 30 carbon atoms, preferably from 6 to 13 carbon atoms; m is an integer of from 2 to 3; n is an integer of from 2 to 3, x is an integer of from 1-30; and y is an integer of from 0-30.

Useful alkoxylated quaternary surfactant of the present invention has the following general formula: 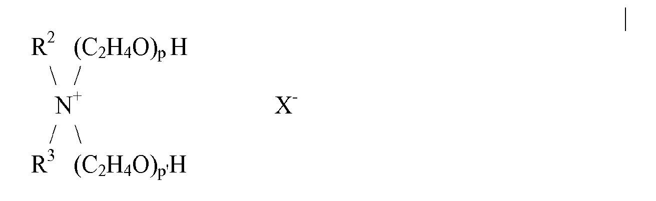 wherein R² is selected from a straight or branched, saturated or unsaturated, substituted or unsubstituted hydrocarbon group having from 8 to 22 carbon atoms; R³ is C1-C4 alkyl; p and p' are independently selected from integers of from 1-30, preferably 1-16; X⁻ is a herbicidally compatible anion.

### Detailed Description of the Invention

The present invention related to an improved herbicidal composition comprising at least one auxin type herbicide and at least one adjuvant, wherein said adjuvant comprises a blend of an alcohol ethoxylate and ethoxylated quaternary surfactant.

In one embodiment the alcohol alkoxylate component of the adjuvant blend has the general formula:

R¹-O-(CₘH₂ₘO)ₚ-(CₙH₂ₙO)_{y}-H (I)

wherein R¹ is a straight or branched, saturated or unsaturated, substituted or unsubstituted hydrocarbon group having from 4 to 30 carbon atoms, preferably from 6 to 13 carbon atoms, wherein on one embodiment said hydrocarbon is an alkyl group; m is an integer of from 2 to 3; n is an integer of from 2 to 3, p is an integer of from 1-30; and y is an integer of from 0-30.

Some nonlimiting examples of the alcohol alkoxylates of the invention are C10-12 alcohol ethoxylate, tridecyl alcohol ethoxylate, C10 alcohol ethoxylate, C8 alcohol ethoxylate, C9-11 Alcohol ethoxylate, and 2-propylheptanol alcohol ethoxylate.

The second component of the adjuvant blend of the present invention, an alkoxylated quaternary surfactant, has the general formula: 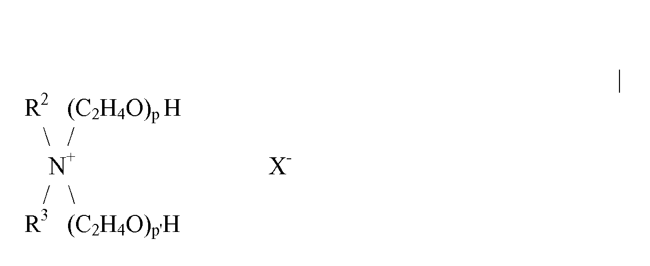 wherein R² is selected from a straight or branched, saturated or unsaturated, substituted or unsubstituted hydrocarbon group having from 8 to 22 carbon atoms, wherein in one embodiment said hydrocarbon is an alkyl group; R³ is C1-C4 alkyl; p and p' are independently selected from integers of from 1-30, preferably 1-16; and X⁻ is a compatible anion.

For the purposes of the present description, the term "alkyl" encompasses straight-chain or branched hydrocarbon groups such as methyl, ethyl, n-propyl, i-propyl, n-butyl, i-butyl, sec-butyl, t-butyl, n-pentyl, n-hexyl, n-octyl, 2-ethylhexyl, n-nonyl, isononyl, n-decyl, isodecyl, n-undecyl, isoundecyl, n-dodecyl, isododecyl, n-tridecyl, isotridecyl, stearyl, n-eicosyl, preferably - unless otherwise specified -having 1 to 8, in particular 1 to 6 and especially preferably 1 to 4 carbon atoms in the case of short-chain radicals and 5 to 30, in particular 12 to 24 and especially preferably 8 to 20 carbon atoms in the case of long-chain radicals. The branched long-chain radicals include mainly 2-ethylhexyl, isononyl, isodecyl such as 2-propylheptyl, isoundecyl, isododecyl, and isotridecyl such as 2,4,8-tetramethyl-1-nonyl, 3,4,6,8-tetramethyl-1-nonyl and 5-ethyl-4,7-dimethyl-1-nonyl.

A particularly useful alkoxylated quaternary surfactant is methyl bis(2-hydroxyethyl)tallow ammonium chloride. Other useful alkoxylated quaternary surfactants include, but are not limited to, octadecylmethyl ethoxylated (2EO) quaternary ammonium, octadecylmethyl ethoxylated (15EO) quaternary ammonium, cocoalkylmethyl ethoxylated (2EO) quaternary ammonium, cocoalkylmethyl ethoxylated (15EO) quaternary ammonium, tallowalkylmethyl ethoxylated (5EO) quaternary ammonium, and tallowalkylmethyl ethoxylated (15EO) quaternary ammonium.

Generally, the ratio of the at least one alkoxylated alcohol to said at least one alkoxylated quaternary ammonium surfactant is in the range of 90:10 and 10:90 by weight; in another embodiment, from 25:75 to 75:25; and in still another embodiment 45:65 to 65:45. In most applications, a ratio that approximates a 50:50 blend performs particularly well.

Auxin type herbicides useful in the context of the present invention include, but are not limited to the following:

| **Herbicide Class** | **Active Ingredient** |
|---|---|
| | |
| Phenoxyalkanoic acids | 2,4-D |
| | 2,4-DB |
| | Dichlorprop (2,4-DP) |
| | MCPA |
| | MCPB |
| | Mecoprop MCPP |
| Benzoic acids | Dicamba |
| Pyridinecarboxylic acids | Clopyralid |
| | Fluroxypyr |
| | Picloram |
| | Triclopyr |
| Quinolinecarboxylic Acids | Quinclorac |

2,4-D and Dicamba are presently preferred auxin type herbicides.

The compositions of the present invention also can include a variety of optional ingredients such as auxiliary surfactants and further auxiliary ingredients such as solvents, diluents, delayed release agents, pH buffers, antifoams, and the like.

Suitable auxiliary surfactants include, but are not limited to other nonionic, other cationic, amphoteric, polymeric surfactants, and the like.

Auxiliary surfactants, if present, generally amount to less than 20% by weight, preferably less than 15% by weight and in particular less than 5% by weight of the total weight of the adjuvant blend composition of the invention.

The herbicide formulations of the present invention may be in the form of an emulsifiable concentrate (EC), a suspoemulsion (SE), an oil-in-water emulsion (O/W), a water-in-oil emulsion (W/O), an aqueous suspension concentrate, an oil suspension concentrate (SC), a microemulsion (ME) and the like. The compositions of the invention are diluted in the customary manner prior to use to obtain a form which is suitable for application. Dilution with water or else aprotic solvents, for example by the tank mix method, is preferred. The use in the form of a slurry preparation is preferred. The application may be pre- or post-emergence. Post-emergence application results in particular advantages.

The composition of the present invention is useful as a tank side additive, or as a component in concentrated herbicidal formulations. The herbicide formulations can be a liquid or a solid form.

The following non-limiting examples are presented to further illustrate and explain the present invention. Unless otherwise indicated, all parts and percentages are by weight, and are based on the weight at the particular stage of the processing being described.

### Example 1 - Herbicidal efficacy of the 2,4-D amine formulations

Table 3 provides the compositions of the surfactant blends information of this invention. Surfactants Reference MW Wt %

**Table 3. Compositons of surfactant blends in the invention**

| Surfactant Blend | Composition 1 | Composition 2 |
|---|---|---|
| Blend A | C 10 alcohol, (5 EO) ethoxylated (70%)¹ | Tallowalkylmethy ethoxylated (15) quaternary salts (30%)² |
| Blend B | C13 alcohol (6 EO) ethoxylated (70) ³ | Tallowalkylmethy ethoxylated (15) quaternary salts (30%) |
| Blend C | C 8 alcohol 4 (5EO)⁴ ethoxylated (70%) | Tallowalkylmethy ethoxylated (15) quaternary salts (30%) |
| Blend D | C 9-11 alcohol (4EO) (70%)⁵ | Tallowalkylmethy ethoxylated (15) quaternary salts (30%) |

| | | |
|---|---|---|
| ¹: Trade name of Ethylan^{®} 1005, product of Akzo Nobel ²: Trade name of Ethoquad^{®} T/25. Product of Akzo Nobel ³: Trade name of Witconol^{®} TD-60. Product of Akzo Nobel ⁴: Trade name of Berol^{®} 840. Product of Akzo Nobel ⁵_{:} Trade name of Bero^{®} 1260. Product of Akzo Nobel | | |

The surfactant blends described in Table 1 were applied by the tank mix method together with 2,4-D amine salt (465 g/l). The application rate per ha was 0.1250 1b 2,4-D amine salt ai /A and 0.25% of surfactant blends according to the invention or 0.25% comparative adjuvant Activator 90 (alkylphenol ethoxylate, alcohol ethoxylate and tall oil fatty acid,(Loveland). The herbicidal effect was assessed in a greenhouse environment after 1, 2, 3, and 4 weeks. The test plant used was alfalfa (*Medicago sativa*).

The plants were sown directly to the pot. When the active ingredient was applied, the plants were 20-30 cm in height. The test containers used were plastic pots containing potting mixture. The solutions were applied by the tank mix method by spray application post-emergence in an automated spray cabinet with a water application rate of 200 liters per hectare. Evaluation was carried out using a scale of from 0% to 100%. 0% means no damage, 100% means complete damage. The results of the assessment are compiled in tables 2 and which follow.

**Table 4 - The effect of adjuvant blends on 2,4-D amine efficacy in Alfalfa**

| **Adjuvant** | **2,4-D DMA** | **Adjuvant** | **Alfalfa (1WAT¹)** | **Alfalfa (2WAT)** | **Alfalfa (3WAT)** | **Alfalfa (4WAT)** |
|---|---|---|---|---|---|---|
| | (1b/A) | (% wt) | % | % | % | % |
| | | | control | control | control | control |
| None | 0.125 | 0 | 10.0 | 20.0 | 20.0 | 37.5 |
| C10 alcohol, (5 EO) ethoxylated | 0.125 | 0.25 | 27.5 | 45.0 | 32.5 | 60.0 |
| Tridecyl alcohol (6 EO) ethoxylated | 0.125 | 0.25 | 17.5 | 45.0 | 45.0 | 65.0 |
| 2-ethylhexyl alcohol (4EO) ethoxylated | 0.125 | 0.25 | 32.5 | 70.0 | 45.0 | 55.0 |
| C 9-11 alcohol (4EO) ethoxylated | 0.125 | 0.25 | 30.0 | 60.0 | 42.5 | 55.0 |
| Tallowalkylmethyl ethoxylated (15EO) quaternary salts | 0.125 | 0.25 | 32.5 | 42.5 | 47.5 | 52.5 |
| Blend A | 0.125 | 0.25 | 40.0 | 70.0 | 62.5 | 70.0 |
| Blend B | 0.125 | 0.25 | 45.0 | 65.0 | 57.5 | 65.0 |
| Blend C | 0.125 | 0.25 | 45.0 | 75.0 | 72.5 | 72.5 |
| Blend D | 0.125 | 0.25 | 37.5 | 67.5 | 60.0 | 71.3 |
| Activator 90² | 0.125 | 0.25 | 22.5 | 12.5 | 12.5 | 42.5 |

| | | | | | | |
|---|---|---|---|---|---|---|
| ¹: Week after treatment (WAT) ²: Commercial adjuvant: Alkyl polyoxyethylene ether & free fatty acids | | | | | | |

It can be seen clearly that formulations with adjuvant blends of the present invention are considerably more effective than the comparative formulation with the individual surfactant components and with the reference adjuvant Activator 90.

## Claims

1. A herbicidal formulation comprising at least one auxin type herbicide and an effective amount of at least one adjuvant composition, wherein said adjuvant composition comprises a blend of at least one alkoxylated alcohol surfactant and at least one alkoxylated quaternary surfactant.

2. The formulation of claim 1 wherein said alkoxylated alcohol surfactant is of the general formula:
R¹-O-(CₘH₂ₘO)ₓ-(CₙH₂ₙO)_{y}-H (I)
wherein R¹ is a straight or branched chain, saturated or unsaturated, substituted or unsubstituted hydrocarbon group having from 4 to 30 carbon atoms, m is an integer of from 2 to 3, n is an integer of from 2 to 3, x is an integer of from 1-30 and y is an integer of from 0-30.

3. The formulation of claim 2 wherein R¹ is a hydrocarbon group having from 4 to 15, preferably from 8 to 13 carbon atoms.

4. The formulation of claim 3 wherein said hydrocarbon group is a straight or branched chain, saturated or unsaturated, substituted or unsubstituted alkyl group.

5. The formulation of any one of the preceding claims wherein said alkoxylated quaternary surfactant is of the general formula: 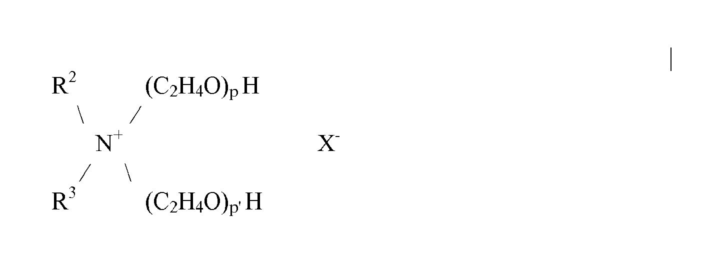 wherein R² is selected from a straight or branched chain, saturated or unsaturated, substituted or unsubstituted hydrocarbon group having from 8 to 22 carbon atoms; R³ is C1-C4 alkyl; p and p' are selected from integers of from 1-30; and X⁻ is a compatible anion.

6. The formulation of any one of the preceding claims wherein the weight ratio of alkoxylated alcohol surfactant to alkoxylated quaternary surfactant is from 10:90 to 90:10.

7. The formulation of claim 7 wherein the weight ratio of alkoxylated alcohol surfactant to alkoxylated quaternary surfactant is from 25:75 to 75:25.

8. The formulation of claim 8 wherein the weight ratio of alkoxylated alcohol surfactant to alkoxylated quaternary surfactant is 45:65 to 65:45.

9. The formulation of any one of the preceding claims wherein said auxin herbicide is selected from the group consisting of 2,4-D, 2,4-DB, Dichlorprop (2,4-DP), MCPA, MCPB, Mecoprop, MCPP, Dicamba, Clopyralid, Fluroxypyr, Picloram, Triclopyr and Quinclorac.

10. The formulation of any one of the preceding claims which additionally comprises one or more co-herbicide chosen from triazines and s-triazines, substituted ureas, uracils, bentazon, desmedipham, methazole, phenmedipham, pyridate, amitrole, clomazone, fluridone, norflurazone, dinitroanilines, isopropalin, oryzalin, pendimethalin, prodiamine, trifluralin, glyphosate, glufosinate, sulfonylureas, imidazolinones, clethodim, sethoxydim, dichlobenil, isoxaben, and bipyridylium compounds.

11. The formulation of any one of the preceding claims wherein said adjuvant blend comprises a blend of at least one alcohol alkoxylate chosen from C10-12 alcohol ethoxylate, tridecyl alcohol ethoxylate, C10 alcohol ethoxylate, C8 alcohol ethoxylate, C9-11 Alcohol ethoxylate, and 2-propylheptanol alcohol ethoxylate, and at least one alkoxylated quaternary surfactant chosen from methyl bis(2-hydroxyethyl)tallow ammonium chloride. Other useful alkoxylated quaternary surfactants include, but are not limited to, octadecylmethyl ethoxylated (2EO) quaternary ammonium, octadecylmethyl ethoxylated (15EO) quaternary ammonium, cocoalkylmethyl ethoxylated (2EO) quaternary ammonium, cocoalkylmethyl ethoxylated (15EO) quaternary ammonium, tallowalkylmethyl ethoxylated (5EO) quaternary ammonium, and tallowalkylmethyl ethoxylated (15EO) quaternary ammonium.

12. A method for treating plants which comprises contacting said plants with an effective amount of the formulation of anyone of the claims 1 to 11.

13. A method of improving the efficacy of a herbicidal formulation comprising an auxin type herbicide, said method comprising adding to said formulation an effective amount of an adjuvant composition which comprises a blend of at least one alkoxylated alcohol surfactant and at least one alkoxylated quaternary surfactant.

14. The use of a formulation according to any one of the claims 1 to 11 for the treatment of plants.

15. The use of a composition comprising a blend of at least one alkoxylated alcohol surfactant and at least one alkoxylated quaternary surfactant as an adjuvant in a herbicidal formulation comprising at least one auxin type herbicide.
